# EUROPEAN PATENT APPLICATION

(11) **EP 2 033 841 A1**
(43) Date of publication of application: **11.03.2009**
(21) Application number: 07253594.1
(22) Date of filing: 10.09.2007
(51) Int. Cl.: B60P 1/16

(54) **Power unit**

(71) Applicant: SPX Corporation, Charlotte, NC 28277 (US)
(72) Inventor: Ward, Gordon, Romford RM5 2PT (GB)
(74) Representative: Maury, Richard Philip

(57) **Abstract**

A hydraulic power unit (401) for operating a pivoted hydraulic cylinder (103) in a vehicle (101) with a tipping body (102) extendable by the hydraulic cylinder (103) is described, comprising a tank (402) for containing hydraulic fluid, and a pump (403) secured to the tank (402) for pumping the hydraulic fluid from the tank (402) to the hydraulic cylinder (103), wherein the tank (402) is sealed independently at least in part by a wall which is cylindrical or part-cylindrical for receiving the hydraulic cylinder (103) thereby to mount the hydraulic power unit (401) on the hydraulic cylinder (103). In this way the hydraulic power unit (401) moves with the hydraulic cylinder (103) during raising or lowering of the tipping body (102) of the vehicle (101) and there is no relative movement between the hydraulic power unit (401) and hydraulic cylinder (103).

## Description

The invention is mainly in the field of hydraulics, particularly hydraulic power units for hydraulic cylinders, although it is applicable to pneumatic cylinders and other types of hydraulic or pneumatic actuators. The invention finds particular application in actuating hydraulic cylinders that pivot during operation, for instance when raising or lowering the tipping bed of a vehicle.

### Background of the Invention

Vehicles such as lorries may be provided with a tipping body in order to facilitate the unloading of goods. Such tipping bodies may be raised and lowered by one or more hydraulic cylinders, operated under hydraulic pressure from a hydraulic power unit.
One end of the hydraulic cylinder is fixed to the chassis of the vehicle while the other end is fixed to the tipping body. The hydraulic cylinder may be hinge mounted to the chassis of the vehicle to allow the hydraulic cylinder to move about a pivot point during operation. The invention finds particular application where the hydraulic cylinder is pivoted and moves relative to the vehicle chassis during raising and lowering of the tipping body.

Conventionally the hydraulic power unit is located separately at a distance from the hydraulic cylinder to which it provides pressurised hydraulic fluid. The working hydraulic fluid is contained in a tank communicating with the hydraulic power unit and the hydraulic cylinder. In order to send hydraulic fluid to the hydraulic cylinder from the hydraulic power unit a flexible hose has been used, to accommodate the relative movement between the hydraulic power unit and the hydraulic cylinder as the tipping body is raised or lowered.

A disadvantage of using a hose to communicate fluid between the hydraulic power unit and hydraulic cylinder is that hoses are prone to failure. When using a hose a burst valve is often used as a safety measure in order to prevent the tipping body of the vehicle from unintentionally lowering in the event of a hose failure. Burst valves add complexity and expense to the system.

It is known from UK 529,093 to provide tipping gear in which a mechanical fluid pump and a working fluid tank are integrated into the end of the hydraulic cylinder, so that the exterior wall of the cylinder acts as part of the containment for the working fluid. A rigid fluid delivery pipe links the pump to the interior of the cylinder. A disadvantage of this system is that the hydraulic power unit cannot be retro-fitted to a hydraulic cylinder.

### Summary of the Invention

The invention provides a hydraulic power unit for operating a pivoted hydraulic cylinder in a vehicle with a tipping body extendable by the hydraulic cylinder, comprising a tank for containing hydraulic fluid, and a pump secured to the tank for pumping the hydraulic fluid from the tank to the hydraulic cylinder, wherein the tank is sealed independently at least in part by a wall which is cylindrical or part-cylindrical for receiving the hydraulic cylinder thereby to mount the hydraulic power unit on the hydraulic cylinder. In this way the hydraulic power unit moves with the hydraulic cylinder during raising or lowering of the tipping body of the vehicle and there is no relative movement between the hydraulic power unit and hydraulic cylinder. In use, the tank holds hydraulic fluid independently of the hydraulic cylinder, and the wall shaped to receive the hydraulic cylinder allows the tank to be fitted closely to the hydraulic cylinder, while remaining sealed independently of the hydraulic cylinder. In this way no special fixing features are required on the hydraulic cylinder in order for the hydraulic power unit to be fitted. Since a wall of the tank is present at the hydraulic cylinder there is no requirement for a special sealing arrangement between the tank and the hydraulic cylinder.

In an embodiment of the invention the tank has a rigid connector for conveying the hydraulic fluid to the hydraulic cylinder. Since there is no relative movement between the hydraulic power unit and hydraulic cylinder a rigid connector may be used.

In an embodiment of the invention the tank is provided with a cylindrical opening through which the body of a hydraulic cylinder may pass. This allows the tank to be mounted about the hydraulic cylinder and thus make use of the storage space available beneath the tipping body of a vehicle, which is typically restricted.

In an embodiment of the invention the pump assembly comprises a pump unit and an electric motor for driving the pump unit. Power is supplied to the hydraulic power unit electrically which enables the operating control to be located at any point on the vehicle or remotely from the vehicle.

In an embodiment of the invention, when fitted to a vehicle the hydraulic power system occupies a space bounded by a chassis of the vehicle and hydraulic cylinder when the tipping body is in the lowered position.

A further invention provides a hydraulic power unit for operating a pivoted hydraulic cylinder in a vehicle with a tipping body extendable by the hydraulic cylinder, comprising means for containing hydraulic fluid, and pumping means secured to the tank for pumping the hydraulic fluid from the containing means to the hydraulic cylinder, wherein the containing means has a wall which seals the containing means and which is cylindrical or part-cylindrical for receiving the hydraulic cylinder thereby to mount the hydraulic power unit on the hydraulic cylinder.

A further invention provides a power unit for operating an actuator in a vehicle with a tipping body extendable by the actuator, comprising a tank for containing actuating fluid, and a pump secured to the tank for pumping the actuating fluid from the tank to the actuator, wherein the tank has a wall which seals the tank, the wall being shaped to receive the actuator such that the actuator abuts the wall and thereby the power unit is mounted on the actuator.

The invention also provides a method of retrofitting a hydraulic power unit to a vehicle with a tipping body, comprising the steps of removing or partially disconnecting the hydraulic cylinder, fitting the hydraulic power unit described and re-fitting the hydraulic cylinder to the vehicle. In one embodiment, the step of removing the hydraulic cylinder is not required, because of the open shape of the tank. The independent nature of the hydraulic power unit described allows fitting to existing cylinders of a given diameter. The tank may be fabricated with any particular diameter walled passage in dependence on the diameter of the cylinder it is intended to fit around.

A further invention provides a method of retrofitting a hydraulic power unit to a vehicle with a tipping body actuable by a hydraulic cylinder, comprising the step of mounting a hydraulic power unit as described to the hydraulic cylinder.

A further invention provides a method of retrofitting a power unit to a vehicle with a tipping body actuable by an actuator, comprising the step of mounting a power unit as described to the hydraulic cylinder.

### Brief Description of the Drawings

Embodiments of the invention will be described with reference to the following figures, in which:
Figure 1 is a schematic perspective view of a vehicle with a tipping body, hydraulic cylinder and vehicle chassis;
Figure 2 is a schematic perspective view of a conventional hydraulic cylinder;
Figure 3 is a partial side elevation of the conventional hydraulic cylinder of figure 2 mounted in a vehicle;
Figure 4 is a perspective view of an embodiment of the invention comprising a hydraulic power unit mounted on a conventional hydraulic cylinder;
Figure 5 is a perspective view of a tank for containing hydraulic fluid in the embodiment of figure 4;
Figure 6 is a perspective view of an alternative form of the tank of figure 5;
Figure 7 is a perspective view of a pump assembly of the hydraulic pump unit of figure 4; and
Figure 8 is a diagram of the hydraulic circuit of the hydraulic pump unit of figure 4.

### Description of the Preferred Embodiments

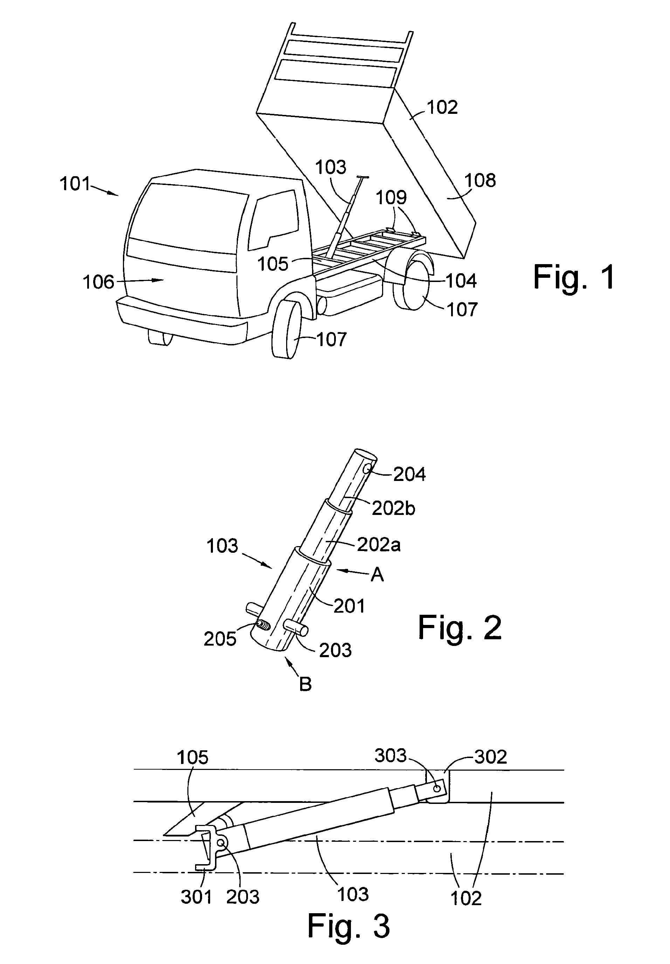

Figure 1 shows the mechanical arrangement of a vehicle 101 with a tipping body 102 actuated by a hydraulic cylinder 103. The tipping body 102 is shown in the raised position. The vehicle 101 has a chassis made up of horizontal chassis rails running the length of the vehicle 101 and cross-beams fixed transversely across the vehicle 101 between the chassis rails. The major components of the vehicle 101 are mounted on the chassis: driver's cab and engine, wheels and tipping body 102. The driver's cab and engine are located towards the front of the chassis while the tipping body 102 is located over the rear of the chassis. The tipping body 102 is an open box-like structure, having a flat bed with opening or removable side walls. The tipping body 102 is hinge mounted to the chassis by hinges located towards the rear of the chassis and tipping body 102. The front end of the tipping body 102 may be raised and lowered pivoting about the rear hinges such that the flat bed becomes inclined towards the vertical. In this way any load on the vehicle 101 will slide off.

The hydraulic cylinder 103 is provided in order to raise and lower the tipping body 102 and is shown in an extended position in figure 1. The hydraulic cylinder 103 is of the single-acting, power up, gravity down type and is shown in detail in figure 2. It has a cylindrical body 201 with successively smaller diameter cylinders 202a, 202b telescopically arranged for fluid drive, as is well known. The body 201 has an open end A and a closed end B. At the closed end two short, laterally-opposed axle stubs 203 are provided, about which the hydraulic cylinder 103 may pivot. A transverse cylindrical passage 204 is provided at the tip of the piston 202b for receiving a retaining bolt (not shown in this figure). Further provided towards the closed end B of the hydraulic cylinder 103 is a threaded hydraulic fluid access port 205, through which hydraulic fluid may flow to operate the hydraulic cylinder 103. The hydraulic cylinder 103 operates between a retracted position (not shown) where there is no hydraulic pressure in the system, and the ends of the three cylinders 201,202a, 202b are flush with each other, and an extended, actuated, position (as shown) where there is hydraulic pressure in the system, maximising the internal fluid volume and driving the cylinders to the point at which further extension is stopped by stopping flanges (not shown). It will be appreciated that other types of hydraulic cylinder are suitable for use in this application.

Figure 3 is a partial close-up view of the hydraulic cylinder 103 mounted in the vehicle, with the hydraulic power unit omitted for clarity purposes. The hydraulic cylinder 103 is pivotally mounted between the chassis and the tipping body 102. A cross-beam 105 of the chassis is provided with mountings 301 to receive the axle stubs 203 on the body of the hydraulic cylinder 103. The underside of the flat bed of the tipping body 102 is provided with a block 302 having a cylindrical passage to receive a retaining bolt 303 which moveably anchors the tip of piston 202b to the tipping body 102.

When the tipping body 102 is in the lowered position as shown in figure 3, the hydraulic cylinder 103 is in a substantially retracted position and is stowed at a shallow angle to the horizontal chassis rails 104, typically 10 degrees, and lies in a space bounded by the chassis rails 104 and the cross-beams 105. When hydraulic power is supplied to the hydraulic cylinder 103 by pumping fluid through the port 205, the cylinder 202a is driven outwardly of the cylinder body 201, the cylinder 202b is driven outwardly of the cylinder 202a and the tipping body 102 thus moves towards a vertical position. The geometric arrangement of the hydraulic cylinder 103 in relation to the chassis and tipping body 102 is such that the hydraulic cylinder 103 also moves towards a vertical position. When in a fully extended position, the angle of the hydraulic cylinder 103 to the horizontal chassis rails 104 is around 70 degrees.

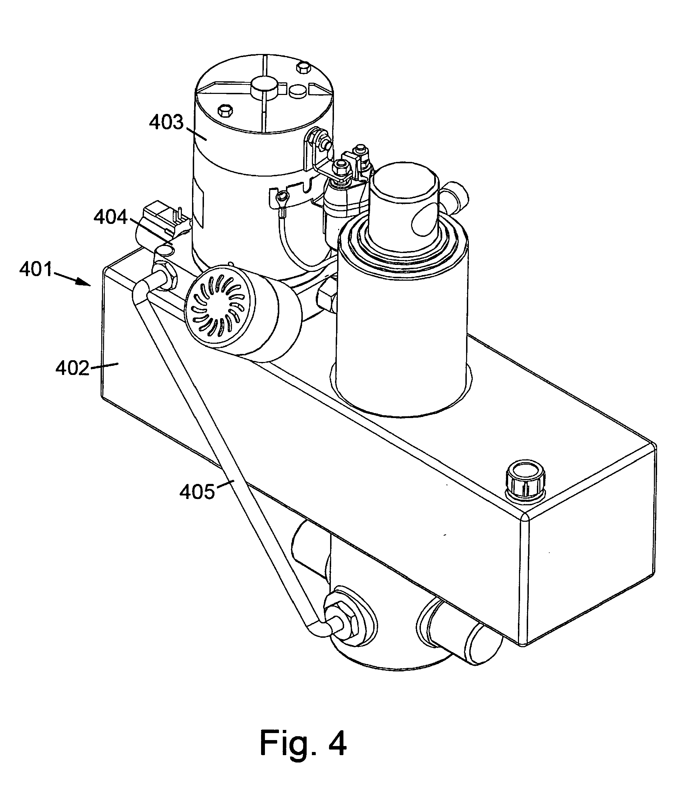

Hydraulic power is supplied to the hydraulic cylinder 201 from a hydraulic power unit 401 as shown in figure 4. The hydraulic power unit 401 is an electric pump and is independent of, but is mounted directly on, the hydraulic cylinder 103. In figure 4 the hydraulic power unit 401 is shown mounted on the hydraulic cylinder 103 but in isolation from the vehicle 101. Mounting the hydraulic power unit 401 on the hydraulic cylinder 103 in this way causes the hydraulic power unit 401 to follow the movement of the hydraulic cylinder 103 as it pivots about the axle stubs 203 during operation. There is no relative movement between the hydraulic power unit 401 and hydraulic cylinder 103, which simplifies the fluid connection between the hydraulic power unit 401 and hydraulic cylinder 103 to the extent that a rigid connector 405 between the two may be used. Rigid connectors are preferable to flexible hoses, as they are less prone to failure. Use of a burst valve to safeguard against such failure is therefore not necessary. The hydraulic power unit 401 is self-contained and does not require specific fittings to be present on the hydraulic cylinder 103, to the extent that any proprietary hydraulic cylinder 103 of appropriate dimensions may be used. The hydraulic power unit 401 may be installed on vehicles with existing hydraulic cylinder arrangements, i.e. retrofitting is possible. The hydraulic power unit 401 is of a size and shape to fit between the chassis rails, the cross beams and beneath the tipping body 102 while also accommodating the hydraulic cylinder 103 which is also located in this region of the vehicle.

The hydraulic power unit 401 is comprised of a tank 402 for containing hydraulic working fluid, a pump assembly 403, 404 and a rigid pipe 405 for communicating hydraulic fluid between the pump assembly and the hydraulic cylinder 103.

The rigid pipe 405 may be fabricated from stainless steel and be provided with securing nuts to secure it to the tank 402 at one end and to the hydraulic cylinder 103 at the other. The length of the rigid pipe 405 will be determined by the desired position of the hydraulic power unit 401 in relation to the hydraulic cylinder 103.

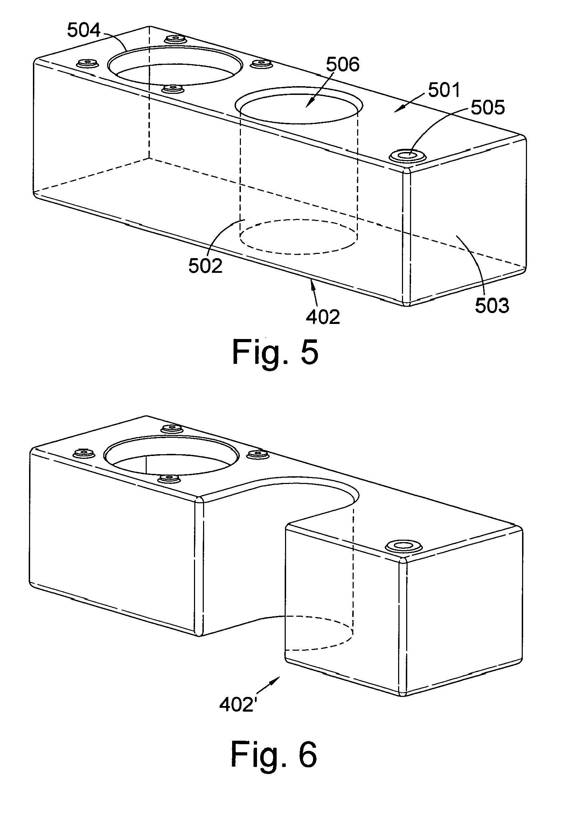

The tank will now be described with reference to figure 5. The tank 402 is a structure for containing a quantity of hydraulic working fluid and is moulded from polyurethane, although other suitable materials may be used such as steel. The tank 402 is formed as an enclosed, box-like structure with an upper surface 501, a lower surface (not shown), four walls (two of which are shown, 502, 503) all joined and sealed to prevent the escape of hydraulic fluid. The external edges of the tank 402 are rounded off. The capacity of the tank 402 is such that it can hold enough hydraulic fluid to operate the hydraulic cylinder 103 between retracted and extended positions, plus a quantity of fluid sufficient to ensure that air does not enter the hydraulic circuit between the pump and cylinder. The dimensions of the tank 402 are such that it fits in the confined space between the chassis rails 102, the cross beams 105 and beneath the tipping body 102 while also accommodating the hydraulic cylinder 103 which is also located in this region of the vehicle 101. The upper surface of the tank 402 is provided with an opening 504 at which the pump assembly is located. A hydraulic fluid fill cap 505 with a breather hole is also provided for filling the tank 402, and a drain plug (not shown) is provided for draining the tank 402 of hydraulic fluid.

A cylindrical passage 506 bounded by a cylindrical wall is provided through the tank 402 between the upper and lower surfaces. The dimensions of the cylindrical passage 506 are determined by the diameter of the body of the hydraulic cylinder 103 fitted to the vehicle. The provision of a cylindrical passage 506 allows the tank 402 to be installed in position by sliding it over the hydraulic cylinder 103 and fixing it in place around the body of the hydraulic cylinder 103. The tank 402 is thus located around the cylinder, making optimum use of the restricted space in the location of the hydraulic cylinder 103.

The cylindrical passage 506 may also be referred to as an opening for receiving the hydraulic cylinder 103.

In order to install the hydraulic power unit 401 the hydraulic cylinder 103 may be removed entirely from the vehicle in order for the hydraulic power unit 401 to be slipped over the hydraulic cylinder 103. Alternatively, one end of the hydraulic cylinder 103 may be disconnected (i.e. partially disconnecting the hydraulic cylinder 103) and the hydraulic power unit 401 slipped over the disconnected end of the hydraulic cylinder 103 and fixed in place.

Other configurations of tank 402 are envisaged which serve the purpose of locating the tank 402 close to the hydraulic cylinder 103 in the space bounded by the chassis rails and cross members of the vehicle. The tank 402', shown in figure 6, is provided with a recess which allows the hydraulic cylinder 103 to rest against the tank 402. In this way the hydraulic cylinder 103 need not be completely removed to install the hydraulic power unit 401.

The cylindrical passage 506 which is an opening with a cylindrical wall ensures that the tank 402 is sealed independently of the hydraulic cylinder 103 so that the hydraulic power unit 401 is self-contained and functions independently of the hydraulic cylinder 103.

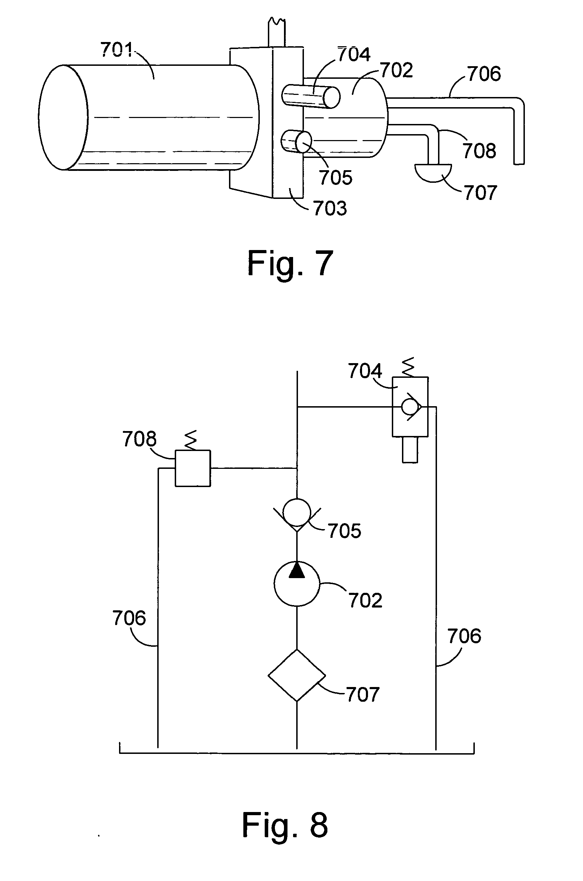

The pump assembly is shown in figure 7. The pump assembly is fitted to the tank 402, 402', and comprises an electric motor 701 coupled to a fixed clearance gear pump 702 having a pumping rate of 3.1cc per revolution. Other types of pump may be used, such as a pressure plated gear pump. The electric motor is a 12 v DC type which is connected to the power supply of the host vehicle. A start solenoid is used.

With reference to the hydraulic circuit diagram in figure 8, the gear pump 702 is provided with a fluid inlet port which is able to draw hydraulic fluid from the tank 402 through opening 504 via a filter 707. The gear pump 702 has a high pressure outlet port. The gear pump's outlet port is connected to a control block 703 located between the gear pump 702 and electric motor 701 and contains galleries and valves to control the flow of hydraulic fluid between the gear pump 702 and hydraulic cylinder 203. From the high pressure outlet port of the gear pump 702, a check valve 705 is provided which prevents hydraulic fluid from flowing in the reverse direction back into the gear pump 702. Following the check valve 702, a 'T' junction is provided, one arm of which is connected to a relief valve 708 which is actuated when the pressure in the circuit reaches a pre-defined level, nominally 180 Bar in this instance. When the relief valve 708 is actuated fluid may flow via an oil return pipe 706 and drain back into the tank 402. The other arm of the 'T' junction continues to a port, attached to which is the rigid connector 405 and ultimately the hydraulic cylinder 203. A further 'T' junction is provided along one arm of which is a solenoid controlled release valve 704. Upon electrical actuation of the solenoid hydraulic fluid may flow via an oil return pipe 706 and drain back into the tank 402.

Operation of the system will now be described. At rest, the tipping body 102 is approximately horizontal, the hydraulic cylinder 103 is retracted and approximately horizontal and is stowed in the space between the vehicle chassis and tipping body 102. There is no excess hydraulic pressure in the system.

When the start solenoid is operated, electrical power is provided to the motor 701 and the gear pump 702 starts to turn. Hydraulic fluid is then pumped from the tank 402 through the control block 703, through the rigid connector 405 to the hydraulic cylinder 103 which starts to extend. As the hydraulic cylinder 103 extends, the tipping body 102 rises, pivoting about the rear hinges 109. The hydraulic cylinder 103 also rises, pivoting about the axle stubs 203. The hydraulic power unit 401 also rises with the hydraulic cylinder 103. The hydraulic cylinder 103 continues to extend as hydraulic fluid is pumped into it, until its furthest extent is reached. At this point the hydraulic cylinder 103 is inclined at approximately 70 degrees to the horizontal chassis rails 104 and the tipping body 102 also inclined at a steep angle. When the hydraulic cylinder 103 is fully extended it is not possible to pump further hydraulic fluid into hydraulic cylinder 103 and if the gear pump 702 is running at this point the pressure would rise. When the pressure reaches the pre-determined pressure release level of the relief valve, the relief valve actuates and allows hydraulic fluid to bypass the hydraulic cylinder 103 to flow back into the tank 402.

When the motor is switched off the gear pump 702 no longer operates, and the relief valve 708 closes when the pressure in the system stabilises at a pressure determined by the relief valve 708. The tipping body 102 then remains in an upright position, exerting pressure on the hydraulic cylinder 103. The tipping body 102 is prevented from lowering because the hydraulic system is closed. The hydraulic fluid is prevented from leaving the system as all valves are shut: the relief valve 708, the release valve 704 and the check valve 705.

In order to lower the tipping body 102, the solenoid on the release valve 708 is actuated which opens the release valve 704 and allows hydraulic fluid to leave the hydraulic cylinder 103 and drain into the tank 402. The weight of the tipping body 102 acting on the hydraulic cylinder piston forces the hydraulic fluid out of the hydraulic fluid access port 205 of the hydraulic cylinder 103, back through the rigid connector 405 into the control block 703, past the release valve 704 and back into the tank 402. This continues until either the solenoid is deactivated and hence the release valve 704 is shut, or until the hydraulic cylinder 103 is fully retracted and there is no longer hydraulic pressure in the system.

It will be appreciated that the hydraulic fluid inlet port should not be allowed to draw air into the hydraulic system. Therefore the filter 707 must always be under hydraulic fluid. This is achieved by locating the filter 707 in a lower corner of the tank 402.

When the hydraulic cylinder 103 is in the stowed position, the tank 402 lies on its side. The tank 402 is at its fullest at this stage. As hydraulic fluid is pumped into the hydraulic cylinder 103 and it rises, the tank 402 steadily assumes a more upright position and the steadily decreasing quantity of hydraulic fluid relocates to cover the base of the tank 402. At no point does the lowest edge of the tank 402 become uncovered, and it is close to this point at which the hydraulic fluid intake and filter 707 is located.

It will also be appreciated that the location of the air breather is such that the level of the hydraulic fluid as the tank 402 moves during operation, does not come near it. An upper edge of the tank 402 does not come into contact with hydraulic fluid and it is in this region that the air breather is located.

The diameter of the cylindrical recess 506 of the tank 402 should be of the order of the outside diameter of the hydraulic cylinder 103, such that the tank 402 is a tight fit to the hydraulic cylinder 103. In this way excessive movement of the hydraulic power unit 401 is prevented. A bracket (not shown) may also be used to anchor the hydraulic power unit 401 to the hydraulic cylinder 103.

It will be appreciated that tanks having different diameter cylindrical passages may be fabricated to accommodate various models of hydraulic cylinders.

It will be further appreciated that the invention is not limited to hydraulic cylinders. The invention may be applied to hydraulic actuators of non-cylindrical cross-section. The tank wall abutting the actuator is then of a shape, usually of constant cross-section along the axis of actuation, to receive the actuator and provide a close fit between the tank and the actuator.

Reference to a hydraulic cylinder is made in the above description. It will be clear to the skilled person that any type of fluid actuator may be utilised, including pneumatic actuators, in which case the fluid referred to above would take the broader meaning to include a gas.

## Claims

1. A hydraulic power unit (401) for operating a pivoted hydraulic cylinder (103) in a vehicle (101) with a tipping body (102) extendable by the hydraulic cylinder, comprising:
a tank (402) for containing hydraulic fluid, and a pump secured to the tank for pumping the hydraulic fluid from the tank (402) to the hydraulic cylinder (103), **characterised in that**
the tank (402) is sealed independently at least in part by a wall which is cylindrical or part-cylindrical for receiving the hydraulic cylinder (103) thereby to mount the
hydraulic power unit on the hydraulic cylinder (103).

2. A hydraulic power unit (401) according to claim 1, wherein the tank (402) has a rigid connector (405) for conveying the hydraulic fluid to the hydraulic cylinder (103).

3. A hydraulic power unit (401) according to claim 1 or 2, wherein the tank (402) has a cylindrical opening (506) therethrough for receiving the hydraulic cylinder (103), the cylindrical wall of the opening constituting said wall.

4. A hydraulic power unit (401) according to any preceding claim, wherein the pump comprises a pump unit (702) and an electric motor (701) for driving the pump unit (702).

5. A hydraulic system for lifting a tipping body (102) of a vehicle (101), comprising a hydraulic cylinder (103) on which is mounted a hydraulic power unit (401) according to any preceding claim, the wall being shaped to conform to the external surface of the hydraulic cylinder (103).

6. A vehicle (101) having a tipping body (102) and comprising a hydraulic system according to claim 5, the hydraulic cylinder being arranged to lift the tipping body.

7. A vehicle (101) according to claim 6, wherein the hydraulic power unit (401) occupies a space bounded by a chassis of the vehicle and the hydraulic cylinder (103) when the tipping body (102) is at its lowered position.

8. A hydraulic power unit (401) for operating a pivoted hydraulic cylinder (103) in a vehicle (101) with a tipping body (102) extendable by the hydraulic cylinder, comprising:
means (402) for containing hydraulic fluid, and pumping means secured to the tank for pumping the hydraulic fluid from the containing means (402) to the hydraulic cylinder (103), wherein the containing means (402) has a wall which seals the containing means and which is cylindrical or part-cylindrical for receiving the hydraulic cylinder (103) thereby to mount the hydraulic power unit on the hydraulic cylinder (103).

9. A power unit (401) for operating an actuator (103) in a vehicle (101) with a tipping body (102) extendable by the actuator, comprising:
a tank (402) for containing actuating fluid, and a pump secured to the tank for pumping the actuating fluid from the tank (402) to the actuator (103), wherein
the tank (402) has a wall which seals the tank, the wall being shaped to receive the actuator (103) such that the actuator (103) abuts the wall and thereby the power unit is mounted on the actuator (103).

10. A power unit according to claim 9, wherein the tank (402) has a rigid connector (405) for conveying the actuating fluid to the actuator (103) and wherein the tank (402) has an opening (506) therethrough for receiving the actuator (103), the wall of the opening constituting said wall.

11. A hydraulic or pneumatic system for lifting a tipping body (102) of a vehicle (101), comprising an actuator (103) on which is mounted a power unit (401) according to claim 9 or 10, the wall being shaped to conform to the external surface of the actuator (103).

12. A vehicle having a tipping body (102) and comprising a hydraulic or pneumatic system according to claim 11, the actuator being arranged to lift the tipping body.

13. A power unit (401) for operating an actuator (103) in a vehicle (101) with a tipping body (102) extendable by the actuator, comprising:
means (402) for containing actuating fluid, and pumping means secured to the containing means for pumping the actuating fluid from the containing means (402) to the actuator (103), wherein
the containing means (402) has a wall which seals the tank, the wall being shaped to receive the actuator (103) such that the actuator (103) abuts the wall and thereby the
power unit is mounted on the actuator (103).

14. A method of retrofitting a hydraulic power unit (401) to a vehicle (101) with a tipping body (102) actuable by a hydraulic cylinder (103), comprising mounting a hydraulic power unit (401) according to claim 1, 2, 3 or 4 to the hydraulic cylinder (103).

15. A method of retrofitting a hydraulic power unit (401) according to claim 14, further including removing or partially disconnecting the hydraulic cylinder (103) before mounting the hydraulic power unit (401) and re-fitting the hydraulic cylinder (103) after mounting the hydraulic power unit (401).

16. A method of retrofitting a hydraulic power unit (401) to a vehicle (101) with a tipping body (102) actuable by a hydraulic cylinder (103), comprising the step of mounting a hydraulic power unit (401) according to claim 1, 2, 3 or 4 to the hydraulic cylinder (103).

17. A method of retrofitting a power unit (401) to a vehicle (101) with a tipping body (102) actuable by an actuator (103), comprising the step of mounting a power unit (401) according to any one of claims 9 to 11 or claim 13 to the hydraulic cylinder (103).
